# EUROPÄISCHE PATENTANMELDUNG

(11) **EP 1 219 496 A2**
(43) Veröffentlichungstag der Anmeldung: **03.07.2002**
(21) Anmeldenummer: 01127782.9
(22) Anmeldetag: 22.11.2001
(51) Int. Cl.: B60Q 1/40, B60Q 1/38

(54) **Einrichtung für die Betätigung von Blinkleuchten eines Fahrzeuges**

(30) Priorität: 28.12.2000 DE 10065497
(71) Anmelder: Valeo Schalter und Sensoren GmbH, 74321 Bietigheim-Bissingen (DE)
(72) Erfinder: Rath, Joachim, 71563 Siegelhausen (DE); Ruff, Achim, 74345 Besigheim (DE); Gross, Michael, 74226 Nordheim (DE); Haas, Philipp, 89134 Blaustein (DE)
(74) Vertreter: Dreiss, Fuhlendorf, Steimle & Becker

(57) **Zusammenfassung**

Die Erfindung betrifft eine Einrichtung für die Betätigung von Blinkleuchten (15) eines Fahrzeuges (1), mit einem von dem Fahrzeuglenker von einer Neutralposition in eine Schaltposition bewegbaren Betätigungselement (13), wobei das Betätigungselement mittel- oder unmittelbar mit einem Schaltelement (17) gekoppelt ist, über welches die Blinkleuchten (15) mittel- oder unmittelbar mit Strom beaufschlagt werden, und mit einer Rückstelleinrichtung (25) zum Rückstellen des Betätigungselements (13) und/oder des Schaltelements (17) aus der Schaltposition in die Neutralposition.

Die Erfindung kennzeichnet sich dadurch, dass der Zeitpunkt der Rückstellung des Betätigungselements (13) und/oder des Schaltelements (17) von einer die Rückstelleinrichtung (25) steuerenden Steuerelektronik (21) bestimmt wird, wobei die Rückstellung in Abhängigkeit von von der Steuerelektronik (21) überwachten Steuersignalen (29,31,33,35) erfolgt.

## Beschreibung

Die Erfindung betrifft eine Einrichtung für die Betätigung von Blinkleuchten eines Fahrzeuges, mit einem von dem Fahrzeuglenker von einer Neutralposition in eine Schaltposition bewegbaren Betätigungselement, wobei das Betätigungselement mittel- oder unmittelbar mit einem Schaltelement gekoppelt ist, über welches die Blinkleuchten mittel- oder unmittelbar mit Strom beaufschlagt werden, und mit einer Rückstelleinrichtung zum Rückstellen des Betätigungselements und/oder des Schaltelements aus der Schaltposition in die Neutralposition.

Die Erfindung betrifft außerdem ein Verfahren zum Betreiben einer derartigen Einrichtung sowie ein Computerprogramm, das zur Durchführung des Verfahrens geeignet ist.

Derartige Einrichtungen sind in vielfältiger Art und Weise bekannt. Sie sind regelmäßig in ein Lenkstockmodul integriert, welches die Lenksäule des Fahrzeuges umgibt. Die Rückstelleinrichtung soll hierbei nach Beendigung eines Lenkmanövers das Betätigungselement bzw. das Schaltelement rückstellen. Der Fahrer setzt durch Betätigen des Betätigungselements das gewünschte Richtungssignal. Danach lenkt er das Fahrzeug in die gewünschte Richtung. Lenkt er in die Richtung, in die geblinkt wird, und überschreitet der Lenkwinkel in diese Richtung einen bestimmten Bereich, und wird daran anschließend wieder zurückgelenkt (Hysterese), so sind die Bedingungen für eine Rückstellung des Betätigungselements bzw. des Schaltelements erfüllt. Die Rückstelleinrichtungen gemäß dem Stand der Technik benötigen hierzu eine komplexe Mechanik.

Die bekannten Einrichtungen haben allerdings den Nachteil, dass die Rückstellung des Betätigungselements bzw. des Schaltelements nicht immer zufriedenstellend erfolgt. Insbesondere bei höheren Fahrzeuggeschwindigkeiten und relativ kleinen Lenkeinschlägen, wie beispielsweise bei einem Spurwechsel auf der Autobahn, erfolgt die Rückstellung häufig nicht. Der Fahrer muss in diesem Falle das Betätigungselement manuell zurücksetzen.

Der vorliegenden Erfindung liegt deshalb die Aufgabe zugrunde, eine Einrichtung bereitzustellen, welche das Rückstellen des Betätigungselements und/oder des Schaltelements auch bei unterschiedlichen Fahrsituationen funktionssicher gewährleistet.

Diese Aufgabe wird bei einer Einrichtung der eingangs genannten Art erfindungsgemäß dadurch gelöst, dass der Zeitpunkt der Rückstellung des Betätigungselements und/oder des Schaltelements von einer die Rückstelleinrichtung steuernden Steuerelektronik bestimmt wird, wobei die Rückstellung in Abhängigkeit von von der Steuerelektronik überwachten Steuersignalen erfolgt.

Die Erfindung hat hierbei den Vorteil, dass der Zeitpunkt der Rückstellung nicht gemäß dem bekannten Stand der Technik mechanisch, sondern elektronisch bestimmt wird. Bei den bekannten Einrichtungen wird lediglich die Drehbewegung des Lenkrades beispielsweise über einen mechanischen Kontakt erfasst. Im Gegensatz hierzu werden erfindungsgemäß für die Rückstellung charakteristische Steuersignale des Fahrzeugs überwacht. In Abhängigkeit dieser Steuersignale kann dann der Zeitpunkt der Rückstellung bestimmt werden. Die Steuerelektronik kann somit ein fahrsituationsabhängiges Rückstellen nach Beendigung des Lenkmanövers veranlassen.

Vorteilhafterweise ist das Schaltelement ein elektronisches Bauteil. Hierdurch entfällt eine mechanische Rastung bzw. eine mechanische Rückstellung des Betätigungselements und/oder des Schaltelements. Vorteilhafterweise kann zudem Bauraum eingespart bzw. für andere Anwendungen zur Verfügung gestellt werden. Durch elektronische Bauteile lässt sich außerdem eine verschleißfreie Rückstellung realisieren, welche u.U. keine mechanische Schnittstelle mit der Lenksäule aufweist.

Erfindungsgemäß umfassen die Steuersignale die Lenkradstellung bzw. die Lenkraddrehgeschwindigkeit, die mittels einer Lenkwinkelmesseinrichtung erfasst wird. Vorteilhafterweise sind moderne Fahrzeuge mit solchen Lenkwinkelmesseinrichtungen ausgestattet.

Weiterhin ist denkbar, dass die Steuersignale die Fahrzeuggeschwindigkeit umfassen, wobei die Fahrzeuggeschwindigkeit mittels einer Geschwindigkeitsmesseinrichtung erfasst wird. Insbesondere durch die Kombination aus Lenkradstellung bzw. Lenkraddrehgeschwindigkeiten und Fahrzeuggeschwindigkeit kann der Zeitpunkt der Rückstellung bestimmt werden. Bei relativ hohen Fahrzeuggeschwindigkeiten kann die Rückstellung schon nach relativ kleinen Änderungen der Lenkradstellung bzw. bei geringen Lenkraddrehgeschwindigkeiten erfolgen, beispielsweise bei einem Spurwechsel auf der Autobahn. Der Fahrer muss hierbei das Betätigungselement nicht mehr gemäß dem Stand der Technik manuell zurücksetzen. Fährt das Fahrzeug mit langsamer Geschwindigkeit, so ist erfindungsgemäß eine relativ große Änderung der Lenkradstellung bzw. eine hohe Lenkraddrehgeschwindigkeit notwendig, um das Betätigungselement bzw. das Schaltelement zurückzusetzen. Die Hysterese der Rückstellung wird also erfindungsgemäß abhängig von der Fahrzeuggeschwindigkeit und der Lenkradstellung bzw. der Lenkgeschwindigkeit unterschiedlich gewählt bzw. programmiert werden.

Erfindungsgemäß ist weiterhin denkbar, dass die Steuersignale die Radlaufgeschwindigkeit von wenigstens zwei Fahrzeugrädern umfassen, wobei die Radlaufgeschwindigkeit mittels Radlaufmesseinrichtungen, die insbesondere Teil eines Antiblockiersystems der Bremsanlage sind, erfasst wird. Auch die Radlaufgeschwindigkeit kann zur Optimierung des Zeitpunkts der Rückstellung betrachtet werden.

Ebenso ist denkbar, dass die Steuersignale die Gierbewegung (Yaw-Rate) des Fahrzeuges umfassen, wobei die Gierbewegungen mittels einer Giermesseinrichtung, die insbesondere Teil eines Fahrzeugstabilisierungssystems ist, erfasst wird.

Vorteilhafterweise sind in modernen Fahrzeugen bereits Messeinrichtungen zur Erfassung der genannten und auch weiteren Messgrößen vorhanden. Zur Realisierung der erfindungsgemäßen Einrichtung sind demnach keine neuen zusätzlichen Messeinrichtungen erforderlich.

Die eingangs genannte Aufgabe wird außerdem durch ein Verfahren, insbesondere zum Betreiben einer im vorhergehenden beschriebenen Einrichtung, gelöst, das sich durch folgende Verfahrensschritte kennzeichnet:
- Betätigen eines Betätigungselements einer Einrichtung für die Betätigung von Blinkleuchten eines Fahrzeuges, wobei das Betätigungselement mittel- oder unmittelbar mit einem Schaltelement gekoppelt ist;
- Erfassen von Steuersignalen und Zuleiten der Steuersignale an eine die Steuersignale überwachende Steuerelektronik;
- Ermitteln des Zeitpunkts der Rückstellung des Betätigungselements und/oder des Schaltelements durch die Steuerelektronik; und
- durch die Steuerelektronik veranlasstes Rückstellen des Betätigungselements und/oder des Schaltelements.

Bei einem bevorzugten Verfahren umfassen die Steuersignale die Lenkradstellung, die Fahrzeuggeschwindigkeit, die Radlaufgeschwindigkeit, die Gierbewegung des Fahrzeuges oder dergleichen.

Die eingangs genannte Aufgabe wird weiterhin durch ein Computerprogramm gelöst, das zur Durchführung des im vorhergehenden beschriebenen Verfahrens geeignet ist, wenn es auf einem Computer oder der Steuerelektonik ausgeführt wird.

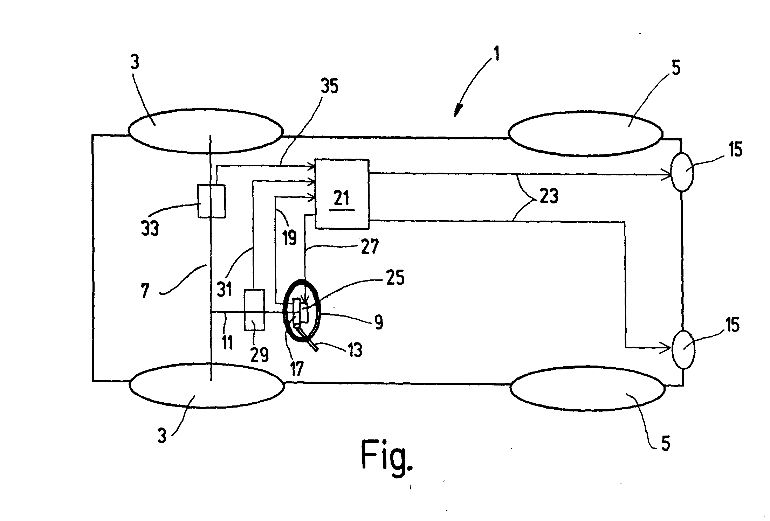

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Figur ist schematisch ein Fahrzeug 1 dargestellt.

Das Fahrzeug 1 weist zwei Vorderräder 3 und zwei Hinterräder 5 auf. Die beiden Vorderräder 3 sind über eine lenkbare Achse 7 miteinander verbunden. Zur Lenkung der Achse 7 ist ein Lenkrad 9 mit einer mit der Achse 7 gekoppelten Lenkstange 11 vorhanden. Im Bereich des Lenkrades 9 ist ein Betätigungselement 13 in Form eines Schalthebels für die Betätigung von Blinkleuchten 15 des Fahrzeugs 1 vorhanden. Das Fahrzeug 1 weist lediglich an seinem Heck Blinkleuchten 15 auf. Genauso ist denkbar, an der Fahrzeugfront entsprechende Blinkleuchten 15 vorzusehen. Das Betätigungselement 13 kann von dem Fahrzeuglenker von einer Neutralposition in eine Schaltposition bewegt werden. Weiterhin ist ein Schaltelement 17 vorgesehen, das die Schaltposition des Betätigungselements 13 über eine Leitung 19 einer Steuerelektronik 21 mitteilt. Die Steuerelektronik 21 veranlasst über die Leitungen 23 ein Betätigen der Blinkleuchten 15.

Zur Rückstellung des Betätigungselements 13 bzw. des Schaltelements 17 nach Beendigung des Lenkmanövers ist eine Rückstelleinrichtung 25 vorgesehen. Die Rückstelleinrichtung 25 wird über eine Leitung 27 von der Steuerelektronik 21 gesteuert. Der Zeitpunkt der Rückstellung wird von der Steuerelektronik 21 in Abhängigkeit von von der Steuerelektronik 21 überwachten Steuersignalen bestimmt. Zu den Steuersignalen zählen bei dem in der Figur wiedergegebenen Ausführungsbeispiel zum Einen der Lenkwinkel bzw. die Lenkgeschwindigkeit des Lenkrades 9 und zum Anderen die Fahrzeuggeschwindigkeit.

Der Lenkwinkel bzw. die Lenkgeschwindigkeit des Lenkrades 9 wird über eine Lenkwinkelmesseinrichtung 29, die an der Lenkstange 11 angeordnet ist, bestimmt. Der erfasste Wert wird über eine Leitung 31 der Steuerelektronik 21 mitgeteilt.

Die Fahrzeuggeschwindigkeit wird mittels einer Geschwindigkeitsmesseinrichtung 33 erfasst, die beispielhaft an der sich drehenden Achse 7 angeordnet ist. Über eine Leitung 35 wird die Fahrzeuggeschwindigkeit der Steuerelektronik 21 mitgeteilt.

Die Steuerelektronik 21 kann derart programmiert sein, dass sie die Rückstelleinrichtung 25 bei hohen Fahrzeuggeschwindigkeiten und langsamer Lenkgeschwindigkeit bzw. nach geringen Lenkausschlägen beaufschlagt. Insbesondere bei Autobahnfahrten ist es erforderlich, das Betätigungselement 13 bzw. das Schaltelement 17 bereits nach einem relativ geringen Lenkausschlag rückzustellen. Andererseits ist bei geringen Fahrzeuggeschwindigkeiten und hohen Lenkgeschwindigkeiten ein Rückstellen des Betätigungselements 13 bzw. des Schaltelements 17 erst nach größeren Lenkwinkeländerungen erforderlich.

Die Hysterese, nach welcher die Rückstellung erfolgen soll, ist gemäß dem Ausführungsbeispiel abhängig von der Fahrzeuggeschwindigkeit und von der Änderung des Lenkwinkels bzw. der Lenkgeschwindigkeit. Die Hysterese wird demnach dynamisch eingestellt. Als weitere Steuersignale können auch andere Werte, wie beispielsweise ABS-Radsensoren, Yaw-Rate-Sensoren oder dergleichen, herangezogen werden. Vorteilhafterweise wird das Blinkersignal elektronisch zurückgesetzt.

Zusammenfassend wird nach folgendem Verfahrensablauf vorgegangen: nach Betätigen des Betätigungselements werden die Blinkleuchten 15 gesetzt. Gleichzeitig werden von der Steuerelektronik 21 die Steuersignale "Fahrzeuggeschwindigkeit" und "Lenkgeschwindigkeit" erfasst. Aufgrund der Steuersignale ermittelt die Steuerelektronik 21 den Zeitpunkt der Rückstellung des Betätigungselements 13 bzw. des Schaltelements 17. Bei Erreichen des entsprechenden Zeitpunkts veranlasst die Steuerelektronik 21 ein Betätigen der Rückstelleinrichtung 25.

Die Steuerelektronik 21 wird erfindungsgemäß fahrzeugspezifisch programmiert. Dies hat insbesondere den Vorteil, dass die Steuerelekronik 21 in verschiedenen Fahrzeugbaureihen mit unterschiedlichen Lenkgestängen mit einer entsprechend angepassten Programmierung Verwendung finden kann.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Einrichtung für die Betätigung von Blinkleuchten (15) eines Fahrzeuges (1), mit einem von dem Fahrzeuglenker von einer Neutralposition in eine Schaltposition bewegbaren Betätigungselement (13), wobei das Betätigungselement mittel- oder unmittelbar mit einem Schaltelement (17) gekoppelt ist, über welches die Blinkleuchten (15) mittel- oder unmittelbar mit Strom beaufschlagt werden, und mit einer Rückstelleinrichtung (25) zum Rückstellen des Betätigungselements (13) und/oder des Schaltelements (17) aus der Schaltposition in die Neutralposition, **dadurch gekennzeichnet, dass** die Rückstellung des Betätigungselements (13) und/oder des Schaltelements (17) von einer die Rückstelleinrichtung (25) steuerenden Steuerelektronik (21) bestimmt wird, wobei die Rückstellung in Abhängigkeit von von der Steuerelektronik (21) überwachten Steuersignalen (29, 31; 33, 35) erfolgt.

2. Einrichtung nach Anspruch 1, **dadurch gekennzeichnet, dass** das Schaltelement (17) ein elektronisches Bauteil ist.

3. Einrichtung nach Anspruch 1 oder 2, **dadurch gekennzeichnet, dass** die Steuersignale (24, 31) die Lenkradstellung bzw. die Lenkraddrehgeschwindigkeit umfassen, wobei die Lenkradstellung bzw. die Lenkraddrehgeschwindigkeit mittels einer Lenkwinkelmesseinrichtung (29) erfasst wird.

4. Einrichtung nach Anspruch 1, 2 oder 3, **dadurch gekennzeichnet, dass** die Steuersignale (33, 35) die Fahrzeuggeschwindigkeit umfassen, wobei die Fahrzeuggeschwindigkeit mittels einer Geschwindigkeitsmesseinrichtung (33) erfasst wird.

5. Einrichtung nach einem der vorhergehenden Ansprüche, **dadurch gekennzeichnet, dass** die Steuersignale die Radlaufgeschwindigkeit von wenigstens zwei Fahrzeugrädern umfassen, wobei die Radlaufgeschwindigkeit mittels Radlaufmesseinrichtungen, die insbesondere Teil eines Antiblockiersystems der Bremsanlage sind, erfasst wird.

6. Einrichtung nach einem der vorhergehenden Ansprüche, **dadurch gekennzeichnet, dass** die Steuersignale die Gierbewegung (Yaw-Rate) des Fahrzeuges umfassen, wobei die Gierbewegung mittels einer Giermesseinrichtung, die insbesondere Teil eines Fahrzeugstabilisierungssystem ist, erfasst wird.

7. nach einem der vorhergehenden Ansprüche, **dadurch gekennzeichnet**, **dadurch gekennzeichnet, dass** die Steuersignale weitere, von weiteren Fahrzeugsystemen erfasste Signale und Werte umfasst, die der Steuerelektronik zugeleitet werden.

8. Verfahren, insbesondere zum Betreiben einer Einrichtung nach wenigstens einem der vorhergehenden Ansprüche, **gekennzeichnet durch** folgende Verfahrensschritte:
- Betätigen eines Betätigungselement (13) einer Einrichtung für die Betätigung von Blinkleuchten (15) eines Fahrzeuges, wobei das Betätigungselement (15) mittel- oder unmittelbar mit einem Schaltelement (17) gekoppelt ist,
- Erfassen von Steuersignalen und Zuleiten der Steuersignale an eine die Steuersignale überwachende Steuerelektronik (21),
- Ermitteln des Zeitpunkts der Rückstellung des Betätigungselements (13) und/oder des Schaltelements (17) **durch** die Steuerelektronik (21) ; und
- **durch** die Steuerelektronik (21) veranlasstes Rückstellen des Betätigungselements (13) und/oder des Schaltelements (17).

9. Verfahren nach Anspruch 8, **dadurch gekennzeichnet, dass** die Steuersignale die Lenkradstellung, die Fahrzeuggeschwindigkeit, die Radlaufgeschwindigkeit, die Gierbewegung (Yaw-Rate) odgl. umfassen.

10. Computerprogramm, **dadurch gekennzeichnet, dass** es zur Durchführung des Verfahrens nach Anspruch 8 oder 9 geeignet ist, wenn es auf einem Computer oder einer Steuerelektronik (21) ausgeführt wird.
